# EUROPEAN PATENT SPECIFICATION

(11) **EP 0 632 934 B1**
(45) Date of publication and mention of the grant of the patent: **06.12.1995**
(21) Application number: 93906754.2
(22) Date of filing: 25.03.1993
(51) Int. Cl.: H01R 39/32

(54) **Method and apparatus for making an armature**
Verfahren und Vorrichtung zur Herstellung eines Ankers
Méthode et appareillage pour fabriquer un induit

(30) Priority: 26.03.1992 GB 9206637
(43) Date of publication of application: 11.01.1995
(73) Proprietor: WATLIFF COMPANY LIMITED, Merton, London SW19 3XB (GB)
(72) Inventor: EDGERTON, Douglas Arthur, Wallington, Surrey SM6 9LX (GB)
(74) Representative: Shindler, Nigel
(86) International application number: PCT/GB93/00617
(87) International publication number: WO 93/19502

(56) References cited:
- DE-A- 2 511 102
- DE-A- 3 017 426
- DE-A- 3 437 744

## Description

The present invention is concerned with a method for manufacturing an armature and a construction of the armature. In particular the invention is concerned with the method of connecting the conductors comprising the windings to a commutator segment anchorage in a high current armature. High current armatures are employed in electric starter motors for vehicle engines, although the invention may be applied to other types of armature.

High current armatures require winding conductors of large gauge wire orstrip (normally above 2mm² C.S.A.) in order to tolerate the high current loads to which they are subjected. The gauge of such conductors creates particular problems with the connection of each winding conductor to a corresponding segment of the commutator.

Conventionally the commutator is formed by mounting a conducting collar on an insulating core. One end of the collar is formed into a flange which extends radially outward from the collar. The collar, including the flange part, is divided into isolated longitudinally extending segments. Each segment thus comprises a lug and an axially extending brush contact. Each segment of the commutator is insulated from the adjacent segments by the introduction of an insulating resin. Slots are then formed, one each in the spaces between them in each lug, by machining from the circumferential surface radially inwards.

To connect the winding to the commutator, two ends of the conductor from the winding are introduced to each slot, one end being placed radially outwards from the other, and secured in place by hot staking. Hot staking involves applying an electrode to the radially outermost conductor end and applying another electrode to the brush contact of the segment. A large electric current is then applied through the conductors and segment and pressure is applied to the conductor ends via the electrode contacted therewith. This causes the conductor ends to fuse into the slot, resulting in a mechanically secure and electrically good contact between the windings and the commutator.

A problem with this method of manufacture is that the commutator must be engineered to support the large mechanical, thermal and electrical stresses applied by the hot staking step. In consequence, the moulded core must be made of special temperature resistant material. These materials are relatively expensive or hazardous, and frequently limit the commutator performance due to thermal distortion ordeg- radation of the moulding material which permits movement of the commutator segments. Similar problems occur when ultrasonically welding or brazing the conductors to the segment.

The mass of material which is required to support the manufacturing loads is much greater than that which is theoretically required forthe armature to support its working loads. The conventional armature is therefore heavier than is required for the working load.

Techniques for ultrasonically welding the conductors to the lugs (sometimes known as the risers) in an armature are disclosed in DE-A-25 11 102, with reference to which the independant claims of the application are characterised and in DE-A-34 37 744.

It is the object of the present invention to provide a method, an apparatus and a commutator for manufacturing an armature which alleviates the aforementioned technical problems exhibited by the prior art.

Accordingly there is provided a method of connecting a winding to a segment of a commutator to form an armature for an electric rotary machine comprising the steps of: positioning end portions of first and second conductors of the winding against a contact surface of a connection portion of the segment to form a stack, engaging a connection member against the stack so that the end portions of the conductors are interposed between the connection member and the contact surface, characterised by the step of engaging a support member with a support surface of the connection portion, whereby connection energies can be applied via the members and the connection energies are confined to the stack.

In the preferred form of this method the wire ends are positioned with their long axis parallel to each other and parallel to the armature axis.

Preferably the stack is formed with the first conductor end sandwiched between the connection portion and the second conductor end. This allows the formation of a stack which extends radially and so occupies a small space in the circumferential direction.

It will usually be most convenient to provide the connection portion radially spaced from the brush contact surface and extending axially away from the winding. In this case a support surface can conveniently be provided on a side of the connection portion facing the axis. The support surface can be engaged by the support member while the ends of the conductors are presented to the contact surface provided on an opposite contact side of the connection portion.

It will be appreciated that by engaging the first and second members on opposite sides of the stack, the energies applied to secure the conductor ends are confined to the stack. Therefore, the core and the part of each segments forming the brush contact surface can be made of materials dimensioned to support the working loads of the armature. Also, because the energies are confined to the stack, the amount of energy required to form the connection is reduced.

The nature of the first and second members depends upon the technique used to secure the stack. Examples of applicable techniques includes: electro- welding/fusing, brazing or sonic welding. In the case of electro-welding the members will be the electrodes. In the case of sonic welding, the members will be the sonotrode and the anvil respectively.

The present method may use commutators constructed by traditional methods, such as cold forming and segmenting a tube on the core. However the present method advantageously allows the commutator to be formed by rolling a metal strip, to form a tube on the core, forming the segments and bending the end of each segment radially outwardly. This method of forming a commutator consumes less material and energy and involves fewer steps than the prior art method.

According to a further aspect of the present invention there is provided, an apparatus for connecting conductors of a winding to a segment of a commutator to form an armature wherein the conductor ends are presented to a connection portion of the segment to form a stack, the apparatus comprising: a connection member engagable with one of the conductor ends to apply energy to the stack to fuse the stack together characterised in that the apparatus includes a support member engagable with a support surface of the connection portion to support the stack and to confine the energies applied to fuse the stack.

Preferably the first and second members comprise the electrodes of an electro-welding apparatus. However, the first and second members may form the corresponding components of braising, soldering or sonic welding apparatus.

Preferably the support member comprises a sleeve with a bore within which the brush contact surfaces, which extend around the core of the commutator are received. The connection portions engage in notches formed in one end of the sleeve to be supported. The notches thus provide the means to support the conductor ends in place against the connection portion and confine the energies applied to fuse the stack.

Further according to the present invention there is provide of a commutator for use in making a high current armature comprising a plurality of segments extending circumferentially around a core each segment having a connection portion adapted to be fused with the ends of two conductors of a winding, to electrically and mechanically connect each segment with a corresponding pair of conductors characterised in that each connection portion is provided with a support surface engageable by a support memberwhere- by the connection portion can be supported while it is fused with a conductor.

Preferably the connection portion is spaced radially from a brush contact surface of the segment and extends to overlie the contact surface. This can be advantageously achieved by bending the end of each segment into a 'U' shape. This conveniently deploys the supports surface facing the axis where it can readily be engaged by the support member, and presents the connection surface facing away from the axis. Thus, the connection to the conductors is spaced at a large radius, which is convenient to accommodate the radius of the winding and the number of pairs of conductors, but the inertial penalty incurred is kept to a minimum because the radial members which support the connection portion can be thin and light.

A preferred embodiment of the present invention will now be described, by way of example only, with reference to the accompanying drawings, in which:
figures 1A, 1B and 1C are plan views illustrating stages in the manufacture of a commutator for use in manufacturing an armature,
figure 2 is a partially sectioned plan view of a stage in assembly of a winding and the commutator to form an armature;
figure 3 is an enlarged perspective view through the window A in figure 2 to illustrate the formation of a stack;
figure 4 is a sectional view on the line I through the window Aoffigure 2, before the stack is fused together;
figure 5 is a view similar to that of figure 4 after the stack is fused together; and,
figure 6 is a perspective view of a supporting member, shown in part in the preceding figures.

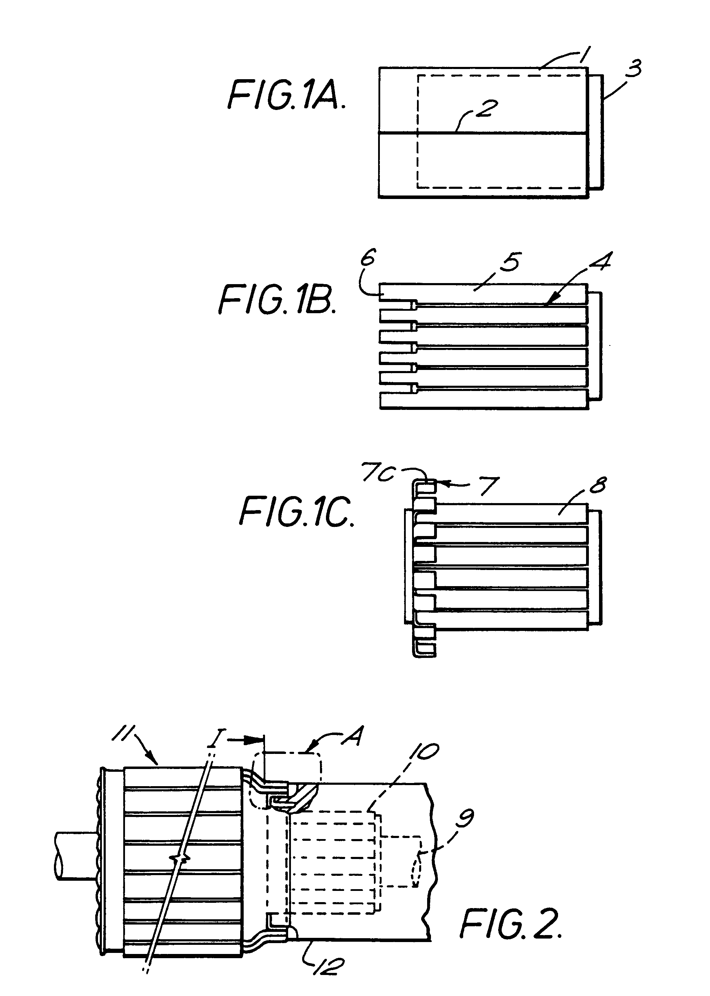

Referring to figures 1a to 1c, these illustrate stages in the manufacture of a commutator 10 for use in the present method. The stages consist of; rolling a rectangle of copper or other conductive metal sheet into a tube 1 and butting the opposite ends together at 2. An insulating tubular core 3 is then moulded into the tube 1.

Longitudinally extending circumferentially spaced cuts 4 are then milled through the collar 1, from end to end to form a plurality of isolated segments 5. At one end of the collar, which extends beyond the end of the core 3 the cuts are enlarged to provide tongues 6 of reduced width. Alternatively the tongues 6 may be blanked out prior to wrapping the shell, thus simplifying the formation of the segments. This may also allow material to be conserved by forming two rectangles with the blanked edges of each rectangle in face to face relation, the tongues of one rectangle being formed of the interleaving material removed from between the tongues of the other rectangle.

At this stage it may be convenient to introduce insulating material into the cuts 4.

As shown in figure Ic the tongues 6 are then folded radially outwardly and then a part of each tongue 7, radially spaced from the axially extending brush contacting part 8 of the segment, is folded back over the brush contacting part to form a hook like lug 7 comprising a connection portion 7a and a supporting radial spoke 7d. The surface of the connection portion 7a of the lug 7 facing the axis of the commutator provides a support surface 7b while the surface of the lug 7 facing away from the axis, opposite the support surface 7b, provides a contacting surface 7c.

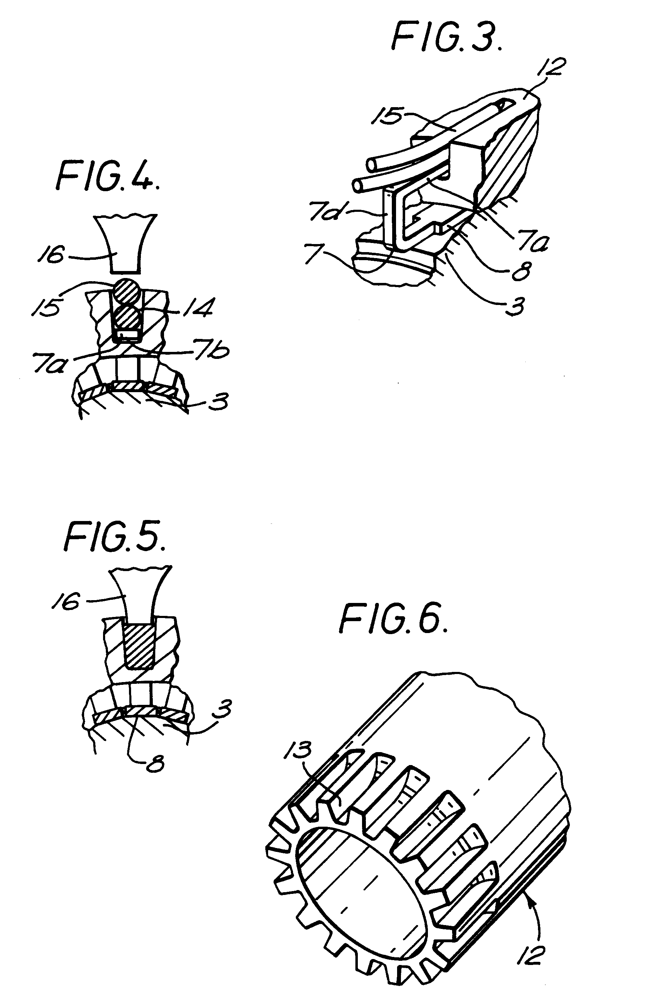

To connect the commutator 10 to a winding 11 as shown in figure 2 the commutator is first mounted onto the armature shaft 9. A supporting member 12 is provided by an annular sleeve and has a bore of a size adapted to receive the brush contacting parts 8 of the commutator 10. A plurality of longitudinally extending, circumferentially spaced notches 13 are formed into the outer surface of one end of the sleeve to receive the connection portions 7a as illustrated in figures 3 to 5.

Once mounted on the supporting member 12, the commutator is presented to the windings 11 as shown in figure 2 and the ends 14, 15 of two conductors which form part of the winding, and which it is desired to contact with the commutator segment, are introduced to a notch 13 in a radially overlying relation. Thus the conductor end 14 contacts the contact surface 7c and the wire end 15 contacts the conductor end 14 as can best be seen in figure 4. It will be appreciated that each of the pairs of conductor ends which it is desired to contact with a corresponding one of the commutator segments may be arranged as shown in figure 4 before the next stage of assembly. The arrangement of the connection portion 7a and conductor ends 14 and 15 shown in figure 4 is known as a stack.

To secure the stack together a connecting member 16, which in this case is one electrode of an electro-welding apparatus, is brought into engagement with a radially outer surface of the wire end 15. In this preferred embodiment the supporting member 12 provides the second electrode of the electro-welding apparatus. Current is then applied via the electrode 16 and supporting member 12 through the stack 7a, 14, 15 and the electrode 16 is used to apply mechanical pressure to the stack. Thus the stack is heated by the electric current and the combined effects of pressure and heating cause the stack to fuse together as shown in figure 5. Electrode 16 is then displaced radially away from the armature and the winding and commutator rotated to present an un-fused stack to the connection member for connection. Once all of the stacks have been fused the supporting member 12 is removed by axial displacement.

It will be appreciated that the apparatus forsecur- ing the stack together may consist of brazing apparatus, in which case the support and connecting members may be simple heaters. Alternatively, ultrasonic welding may be used, in which case anvil 12 simply provides mechanical support while the first member 16 is a sonotrode.

The method contemplates the possibility of simultaneously securing several stacks by the simultaneous application of several connecting members. Thus, for example, four stacks may simultaneously be secured by the application of four electrodes, the commutator rotated with respect to the electrodes, and four more stacks secured.

In an alternative embodiment of the apparatus (not shown), the conductor ends may be supported in the stack configuration by being received in a notch in the connection member. In this case the notches may be unnecessary in the supporting member.

This method of manufacturing an armature presents numerous advantages in comparison with conventional methods of manufacturing high current armatures which require large gauge wires (e.g., in excess of 2mm²) to form the windings. These include a reduced number of manufacturing steps, reduced consumption of material, reduced energy consumption, the possibility of producing high current armatures of reduced weight and inertia. Because the lugs can be made relatively thin in the circumferential direction it is possible to increase the number of commutator segments and or reduce the diameter of the axial part 8 of the commutator.

## Claims

1. A method of connecting a winding to a segment (5) of a commutator to form an armature for an electric rotary machine comprising the steps of:
positioning end portions (14,15) of first and second conductors of the winding against a contact surface (7c) of a connection portion (7a) of the segment (5) to form a stack,
engaging a connection member (16) against the stack so that the end portions of the conductors are interposed between the connection member (16) and the contact surface (7c),
characterised by the step of engaging a support member (12) with a support surface (7b) of the connection portion (7a), whereby connection energies can be applied via the members (12,16) and the connection energies are confined to the stack.

2. A method according to claim 1 wherein the steps of the method are performed simultaneously upon a fraction of the several segments (5) of the commutator and repeated sequentially on differ- entfractions until all the segments (5) of the commutator have been connected to the conductors of the winding.

3. A method according to claim 1 or claim 2 wherein the conductor ends (14,15) are secured by electro-welding.

4. A method according to claim 1 or claim 2 wherein the conductor ends (14,15) are secured by sonic- welding.

5. A method according to any one of the preceding claims wherein the connection portion (7a) is provided by bending an end of the segment (5) outwardly and back so that the contact surface (7c) is provided by the surface of the connection portion (7a) facing away from the axis, and the support surface (7b) is provided on the opposite, axis facing surface of the connection portion (7a).

6. A method according to any one of the preceding claims wherein the stack is formed with the first conductor end interposed between the contact surface and the second conductor end.

7. A method according to claim 6 wherein the stack is constructed to extend radially.

8. An apparatus for connecting conductors of a winding to a segment (5) of a commutator to form an armature wherein the conductor ends (14,15) are presented to a connection portion (7a) of the segment (5) to form a stack, the apparatus comprising
a connection member (16) engagable with one of the conductor ends (14,15) to apply energy to the stack to fuse the stack together
characterised in that the apparatus includes a support member (12) engagable with a support surface (7b) of the connection portion (7a) to support the stack and to confine the energies applied to fuse the stack.

9. Apparatus according to claim 8 wherein the support member (12) is an annular sleeve having an axial bore adapted to receive the brush contacting parts (8) of the commutator and a plurality of longitudinally extending, circumferentially spaced notches (13) are provided in the outer surface of one end of the sleeve to receive each stack formed by all the commutator connection portions (7a) and pairs of conductor ends (14,15).

10. Apparatus according to claim 8 adapted to fuse the stack together by hot staking, wherein an electrode is provided in each notch (13) and a complementary electrode is provided by each connection member (16).

11. Apparatus according to claim 9 wherein the stack is fused together by sonic welding the sonotrode being provided by the connection member (16), and an anvil being provided by each notch (13).

12. Apparatus according to any one of the claims 8 to 11 wherein a plurality of connection members (16) are provided to enable simultaneous fusing of several stacks.

13. A commutator for use in making a high current armature comprising
a plurality of segments (5) extending circumferentially around a core (3) each segment (5) having a connection portion (7a) adapted to be fused with the ends of two conductors (14,15) of a winding, to electrically and mechanically connect each segment (5) with a corresponding pair of conductors (14, 15) characterised in that
each connection portion (7a) is provided with a support surface (7b) engageable by a support member (12) whereby the connection portion (7a) can be supported while it is fused with a conductor.

14. A commutator according to claim 13 wherein the connection portion (7a) is radially spaced from a brush contact surface of the segment (5), overlies the brush contact surface so that the support surface (7b) faces the axis of the commutator and the connection surface (7c) faces away from the axis.

15. A commutator according to claim 14 wherein the connection portion (7a) is radially spaced by bending an end of a segment (5) into a 'U' shape.

## Patentansprüche

1. Verfahren zum Anschließen einer Wicklung an ein Segment (5) eines Kommutators zur Bildung eines Ankers für eine elektrische Drehmaschine, bei dem man
die Enden (14,15) eines ersten und zweiten Leiters der Wicklung zur Bildung eines Stapels gegen eine Kontaktfläche (7c) eines Anschlußteils (7a) des Segments (5) legt, und
ein Verbindungselement (16) gegen den Stapel wirkend so zum Eingriff bringt, daß die Enden der Leiter zwischen dem Verbindungselement (16) und der Kontaktfläche (7c) angeordnet sind,
dadurch gekennzeichnet, daß man einen Stützkörper (12) mit einer Stützfläche (7b) des Anschlußteils (7a) in Eingriff bringt, so daß über die Körper (12,16) Verbindungsenergien zugeführt werden können und die Verbindungsenergien auf den Stapel beschränkt werden.

2. Verfahren nach Anspruch 1, bei dem die Verfahrensstufen gleichzeitig an einem Teil der mehreren Kommutatorsegmente (5) durchgeführt und nacheinander an verschiedenen Teilen wiederholt werden, bis alle Segmente (5) des Kommutators an die Wicklungsleiter angeschlossen sind.

3. Verfahren nach Anspruch 1 oder Anspruch 2, bei dem die Leiterenden (14,15) durch Elektroschweißen befestigt werden.

4. Verfahren nach Anspruch 1 oder Anspruch 2, bei dem die Leiterenden (14,15) durch Schallschweißen befestigt werden.

5. Verfahren nach einem der vorhergehenden Ansprüche, bei dem das Anschlußteil (7a) durch Auswärts- und Zurückbiegen eines Endes des Segments (5) geschaffen wird, so daß die Kontaktfläche (7c) durch die von der Achse weg gerichtete Oberfläche des Anschlußteils (7a) gebildet wird und die Stützfläche (7b) auf der entgegengesetzten, der Achse zugewandten Fläche des Anschlußteils (7a) gebildet wird.

6. Verfahren nach einem der vorhergehenden Ansprüche, bei dem der Stapel in der Weise gebildet wird, daß das erste Leiterende zwischen der Kontaktfläche und dem zweiten Leiterende angeordnet wird.

7. Verfahren nach Anspruch 6, bei dem der Stapel sich radial erstreckend aufgebaut wird.

8. Vorrichtung zum Anschließen der Leiter einer Wicklung an ein Segment (5) eines Kommutators zur Bildung eines Ankers, bei der die Leiterenden (14,15) zur Stapelbildung an ein Anschlußteil (7a) des Segments (5) geführtsind, wobei die Vorrichtung
ein mit einem der Leiterenden (14,15) in Eingriff bringbares Verbindungselement (16) für die Energiezufuhr zu dem Stapel umfaßt, um den Stapel zusammenzuschmelzen,
dadurch gekennzeichnet, daß die Vorrichtung einen mit einer Stützfläche (7b) des Anschlußteils (7a) in Eingriff bringbaren Stützkörper (12) umfaßt, um denStapel zu stützen und die zum Schmelzen des Stapels zugeführten Energien zu beschränken.

9. Vorrichtung nach Anspruch 8, bei der der Stützkörper (12) eine ringförmige Hülse mit einer axialen Bohrung zur Aufnahme der die Bürste berührenden Teile (8) des Kommutators ist und in der Außenfläche eines Hülsenendes mehrere in Längsrichtung verlaufende, in Umfangsrichtung auf Abstand gehaltene Nuten (13) zur Aufnahme aller Stapel vorgesehen sind, die durch alle Kommutatoranschlußteile (7a) und Paare von Leiterenden (14,15) gebildet sind.

10. Vorrichtung nach Anspruch 8 zum Zusammenschmelzen des Stapels durch Warmnietung, bei der in jeder Nut (13) eine Elektrode vorgesehen ist und durch jedes Verbindungselement (16) eine Komplementärelektrode gebildet ist.

11. Vorrichtung nach Anspruch 9, bei der der Stapel durch Schallschweißen zusammengeschweißt wird, wobei durch das Verbindungselement (16) die Sonotrode und durch jede Nut (13) ein Amboß gebildet wird.

12. Vorrichtung nach einem der Ansprüche 8 bis 11, bei der eine Mehrzahl von Verbindungselementen (16) vorgesehen ist, um das gleichzeitige Schmelzen mehrerer Stapel zu ermöglichen.

13. Kommutator zur Verwendung bei der Herstellung eines Hochstromankers mit
mehreren, sich in Umfangsrichtung um einen Kern (3) erstrekkenden Segmenten (5), wobei jedes Segment (5) einen Anschlußteil (7a) zurVerschmelzung mit den Enden von zwei Leitern (14,15) einer Wicklung hat, um jedes Segment (5) mit einem entsprechenden Leiterpaar (14,15) elektrisch und mechanisch zu verbinden, dadurch gekennzeichnet, daß
jedes Anschlußteil (7a) mit einer mit einem Stützkörper (12) in Eingriff bringbaren Stützfläche (7b) versehen ist, so daß der Anschlußteil (7a) während seiner Verschmelzung mit einem Leiter abgestützt werden kann.

14. Kommutator nach Anspruch 13, bei dem der Anschlußteil (7a) von der Bürstenkontaktfläche des Segments (5) radial auf Abstand gehalten ist und über der Bürstenkontaktfläche liegt, so daß die Stützfläche (7b) der Kommutatorachse zugewandt und die Anschlußfläche (7c) von derAchse abgewandt ist.

15. Kommutator nach Anspruch 14, bei dem der Anschlußteil (7a) dadurch radial auf Abstand gehalten ist, daß ein Ende eines Segments (5) "U"-förmig gebogen ist.

## Revendications

1. Méthode de branchement d'un enroulement à une lame de collecteur (5) d'un collecteur pour former un induit pour machine rotative électrique comprenant les phases suivantes:-
placement des sorties (14, 15) d'un premier conducteur et d'un second conducteur de l'enroulement contre une face de contact (7c) d'une partie de connexion (7a) d'une lame de collecteur (5) pour former un empilement,
mise en contact d'un élément de formation de contact fixe (16) avec l'empilement pour que les sorties de conducteurs s'interposent entre l'élément de formation de contact fixe (16) et la face de contact (7c),
caractérisée par une phase d'engagement d'un élément de support (12) avec une face de portée (7b) de la partie de connexion 7a, pour pouvoir d'une part appliquer les énergies de formation de contact fixe par l'intermédiaire des éléments (12 et 16) et d'autre part d'empêcher ces énergies de formation de contact fixe de se propager à l'extérieur du périmètre de l'empilement.

2. Méthode selon la revendication 1, dans laquelle les phases de mise en oeuvre de la méthode se déroulement simultanément sur une partie de la totalité des lames de collecteurs (5) du collecteur et se renouvellent de manière séquentielle sur différentes parties du collecteur jusqu'à ce que toutes les lames de collecteur aient été connectées aux sorties des conducteurs des enroulements.

3. Méthode selon la revendication 1 ou la revendication 2, dans laquelle les sorties de conducteurs (14, 15) sont connectées par électrosoudure.

4. Méthode selon la revendication 1 ou la revendication 2, dans laquelle les sorties de conducteurs (14, 15) sont connectées par soudure par ultrasons.

5. Méthode selon n'importe laquelle des revendications précédentes, dans laquelle la partie de connexion (7a) est obtenue par pliage d'une des extrémités des lames de collecteur (5) vers l'extérieur et recourbée de façon à ce que la face de contact (7c) soit représentée par la face de la partie de connexion (7a) située en direction opposée à l'axe, et la face de support (7b) se trouve sur l'axe opposé et fasse face à la face de la partie de connexion (7a).

6. Méthode selon l'une quelconques des revendications précédentes, dans lequel l'empilement est formé par la première sortie de conducteur interposée entre la face de contact et la seconde sortie de conducteur.

7. Méthode selon la revendication 6, dans laquelle l'empilement a été étudié pour s'étendre radialement.

8. Appareil pour connecter les conducteurs d'un enroulement à une lame de collecteur (5) d'un collecteur pour former un induit dans lequel les sorties de conducteurs (14, 15) sont présentées à une partie de connexion (7a) de la lame de collecteur (5) pour former un empilement, l'appareil comprenant
un élément de formation de contact fixe (16) qui est mis en contact avec la face d'une des sorties de conducteurs (14, 15) pour appliquer l'énergie à l'empilement pour faire fusionner ensemble les éléments de l'empilement,
caractérisé par le fait que l'appareil comporte un élément de support (12) en contact avec la face de portée (7b) de la partie de connexion (7a) pour supporter l'empilement et pour empêcher la propagation des énergies appliquées pour faire fondre les éléments de l'empilement.

9. Appareil selon la revendication 8, dans lequel l'élément de support (12) est un manchon annulaire ayant d'une part un alésage axial adapté pour recevoir les faces de contact avec les balais (8) du collecteur et d'autre part une pluralité d'encoches (13) qui se projettent longitudinalement et sont réparties sur la circonférence extérieure à l'une des extrémités du manchon de support (12) pour recevoir chaque empilement formé par toutes les parties de connexion (7a) du collecteur et les paires de sorties de conducteurs (14, 15).

10. Appareil selon la revendication 8 adapté pourfai- re fondre ensemble tous les éléments de l'empilement par contact rapporté à chaud, dans lequel appareil une électrode est placée dans chaque encoche (13) et chaque élément de formation de contact fixe (16) sert d'électrode complémentaire.

11. Appareil selon la revendication 9, dans lequel les éléments de l'empilement fusionnent ensemble par soudure par ultrasons, l'élément de formation de contact fixe (16) étant une sonotrode et chaque encoche (13) servant d'enclume.

12. Appareil selon l'une quelconque des revendications 8 à 11, dans lequel on a prévu une pluralité d'éléments de formation de contact fixe (16) pour permettre la fusion simultanée de plusieurs empilements.

13. Collecteur utilisé dan la fabrication des induits traversés par de très hautes intensités comprenant
une pluralité de lames de collecteur (5) qui s'étendent circonférenciellement tout autour du manchon isolant (3) chaque segment (5) ayant une partie de connexion (7a) adaptée pour fusionner avec deux sorties de conducteurs (14, 15) d'un enroulement, pour connecter électriquement et mécaniquement chaque lame de collecteur (5) avec une paire de conducteurs correspondante (14, 15), caractérisé par le fait que
chaque partie de connexion (7a) comporte une face de support (7b) en contact avec un élément de support (12) pour supporter la partie de connexion (7a) pendant qu'elle fusionne avec un conducteur.

14. Collecteur selon la revendication 13, dans lequel la partie de connexion (7a) est distante radialement de la face de contact des balais de la lame (5), surplombe la face de contact des balais pour que la face de support (7b) fasse face à l'axe du collecteur et que la face de connexion (7c) soit dirigée à l'opposé de cet axe.

15. Collecteur selon la revendication 14, dans lequel la partie de connexion (7a) soit radialement distante en pliant une extrémité de la lame de collecteur (5) en forme de « U ».
